**Europäisches Patentamt**

**European Patent Office**

**Office européen des brevets**

(19)

(11) Veröffentlichungsnummer: **0 058 991**
**B1**

(12) # EUROPÄISCHE PATENTSCHRIFT

(45) Veröffentlichungstag der Patentschrift:
**11.07.84**

(21) Anmeldenummer: **82101387.7**

(22) Anmeldetag: **24.02.82**

(51) Int. Cl.³: **F 23 B 1/06,** F 23 B 1/08,
F 23 L 17/00, F 23 L 15/00,
F 24 B 7/04

(54) **Ofen zur Verbrennung fester Brennstoffe, insbesondere Holz.**

(30) Priorität: **25.02.81 DE 3107057**

(43) Veröffentlichungstag der Anmeldung:
**01.09.82 Patentblatt 82/35**

(45) Bekanntmachung des Hinweises auf die Patenterteilung:
**11.07.84 Patentblatt 84/28**

(84) Benannte Vertragsstaaten:
**AT BE CH DE FR GB IT LI LU NL SE**

(56) Entgegenhaltungen:
**DE - A - 2 461 010**
**DE - A - 2 602 811**
**DE - A - 2 913 268**
**DE - C - 1 038 258**

(73) Patentinhaber: **Nagy, Johann, 10, Kleeberger Strasse,
D-8399 Kleeberg (DE)**

(72) Erfinder: **Nagy, Johann, 10, Kleeberger Strasse,
D-8399 Kleeberg (DE)**

(74) Vertreter: **Oedekoven, Wolf-Dieter, Dipl. Ing.,
Widenmayerstrasse 5, D-8000 München 22 (DE)**

## Beschreibung

Die Erfindung bezieht sich auf einen Ofen der im Oberbegriff des Patentanspruchs 1 angegebenen Gattung.

Ein derartiger Ofen zur Verbrennung fester Brennstoffe, insbesondere Holz, ist bereits in einem am Tag der Anmeldung nicht vorveröffentlichten Stand der Technik (DE-A1-3 044 088, veröffentlicht am 3.6.82) vorgeschlagen worden. Dabei strömt die Verbrennungsluft durch einen Rost am Boden der Brennkammer hindurch in dieselbe und ist das Gebläse in einen der beiden Rauchgaskanäle eingeschaltet, welche einerseits jeweils an der einen bzw. an der anderen Ofenstirnseite mit der Brennkammer kommunizieren sowie andererseits nebeneinander in den gemeinsamen Rauchgaskanal münden.

Dieser Ofen soll eine verbesserte Verbrennung fester Brennstoffe gewährleisten, insbesondere auch solcher mit einem verhältnismässig hohen Feuchtigkeitsgehalt, wie nasses Holz. Tatsächlich verbrennt in diesem Ofen selbst frisch geschlagenes, verhältnismässig feuchtes Holz rauchfrei mit farbloser bzw. bläulicher Flamme. Die mit den Rauchgasen in Berührung kommenden Teile sind auch nach längerer Betriebsdauer weiss. Es konnte beobachtet werden, dass ein gewisser Wassergehalt der verfeuerten festen Brennstoffe sogar günstig zu sein scheint und auch das dosierte Einspritzen von Wasser in die Brennkammer das Verbrennen von Holzstücken mit farbloser bzw. bläulicher Flamme stabilisiert, vor allem dann, wenn sie verhältnismässig trocken sind.

Der Erfindung liegt die Aufgabe zugrunde, einen Ofen der im Oberbegriff des Patentspurchs 1 angegebenen Art zu schaffen, welcher bei möglichst einfachem und billigem Aufbau hinsichtlich der Funktionsweise, insbesondere im Hinblick auf die Regelbarkeit, weiter verbessert ist, wobei Niederschläge und Ablagerungen im Ofen, einschliesslich der Rauchgaskanäle, ebenso vermieden sein sollen, wie unzulässige Emissionen in die Atmosphäre.

Diese Aufgabe ist durch die im kennzeichnenden Teil des Patentanspruchs 1 angegebenen Merkmale gelöst. Vorteilhafte Ausgestaltungen des erfindungsgemässen Ofens sind in den übrigen Patentansprüchen gekennzeichnet.

Nachstehend sind Ausführungsformen des erfindungsgemässen Ofens zur Verbrennung fester Brennstoffe, insbesondere Holz, anhand der Zeichnung beispielsweise beschrieben. Darin zeigen, jeweils schematisch:

Figur 1 den mittleren, senkrechten Längsschnitt durch eine erste Ausführungsform;

Figur 2 den Querschnitt entlang der Linie II–II in Figur 1 in grösserem Massstab;

Figur 3 den Längsschnitt entsprechend Figur 1 durch eine zweite Ausführungsform; und

Figur 4 den Querschnitt entlang der Linie IV–IV in Figur 3.

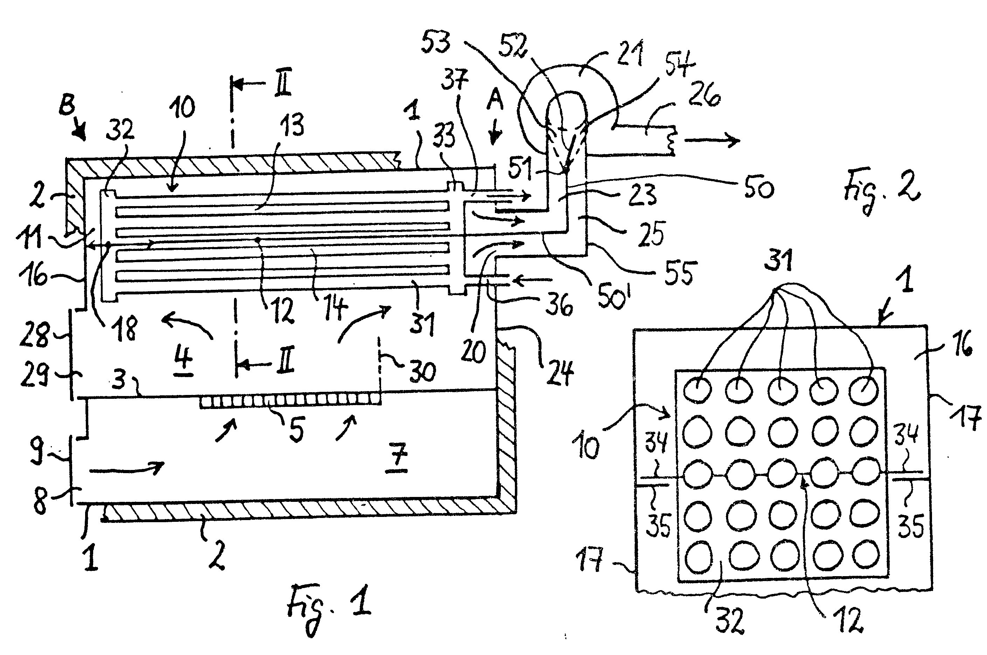

Der Ofen gemäss Figur 1 und 2 weist ein kastenförmiges Gehäuse 1 mit äusserer Wärmeisolierung 2 auf. Im Abstand vom Boden des Gehäuses 1 ist eine waagerechte Trennwand vorgesehen, welche den Boden 3 eines Feuerraums bzw. einer Brennkammer 4 bildet. Im Boden 3 ist ein Rost 5 vorgesehen. Der Raum unterhalb des Bodens 3 dient zur Aschenaufnahme und bildet eine Aschekammer 7, welche an dem in Figur 1 linken Ende mit einer Öffnung 8 versehen ist, die durch eine Klappe 9 verschlossen wird.

Oberhalb der Brennkammer 4 ist im Gehäuse 1 ein Wärmetauscher 10 angeordnet. Der den Wärmetauscher 10 enthaltende Raum 11 ist durch eine waagerechte Trennwand 12 in eine Oberkammer 13 und eine Unterkammer 14 unterteilt. Die Trennwand 12 erstreckt sich von der in Figur 1 rechten Ofenstirnseite A auf die in Figur 1 linke Ofenstirnseite B zu, um im Abstand von der in Figur 1 linken Stirnwand 16 des Gehäuses 1 zu enden und damit sowie den beiden Längsseitenwänden 17 des Gehäuses 1 (Figur 2) eine Öffnung 18 zu begrenzen, über welche die Oberkammer 13 und die Unterkammer 14 miteinander kommunizieren.

Die Rauchgase werden aus dem Ofen durch eine Öffnung 20 an der Ofenstirnseite A mittels eines Gebläses 21 abgezogen. Zu dem Gebläse 21 führen zwei Rauchgaskanäle 23 und 25, welche durch die Öffnung 20 in der in Figur 1 rechten Stirnwand 24 des Gehäuses 2 hindurch mit der Oberkammer 13 bzw. der Unterkammer 14 kommunizieren. Vom Gebläse 21 geht ein gemeinsamer Rauchgaskanal 26 ab.

Auf der Ofenstirnseite B weist der Ofen eine Tür 28 auf, welche zum Verschliessen einer Brennstoffeingabeöffnung 29 dient, die im Bereich der Brennkammer 4 in der Stirnwand 16 des Gehäuses 1 vorgesehen ist. In der Brennkammer 4 kann auf der der Tür 28 abgewandten Seite des Rostes 5 ein Anschlag 30 für zu verbrennende Holzstücke vorgesehen sein. Die Brennkammer 4 kommuniziert unmittelbar mit der Unterkammer 14 und dem Rauchgaskanal 25 sowie über die Öffnung 18 mit der Oberkammer 13 und dem davon abgehenden Rauchgaskanal 23.

Der Wärmetauscher 10 besteht aus einem Bündel gerader, paralleler Rohre 31 und zwei viereckigen Kästen 32 sowie 33 am einen bzw. am anderen Rohrbündelende. Die Rohre 31 erstrecken sich waagerecht zwischen den beiden senkrechten Kästen 32 und 33, münden jeweils mit den beiden Enden in den einen Kasten 32 bzw. in den anderen Kasten 33 und sind in fünf waagerechten sowie fünf senkrechten Reihen angeordnet, wie besonders deutlich aus Figur 2 hervorgeht.

Daraus ist auch ersichtlich, dass die waagerechte Trennwand 12 am Wärmetauscher 10 vorgesehen ist, welcher mit den beiden nach aussen über den Umriss der Kästen 32 und 33 abstehenden Längsrändern 34 der Trennwand 12 auf zwei inneren Längsvorsprüngen 35 der Ofenseitenwände bzw. der Längsseitenwände 17 des Gehäuses 1 aufliegt. Im dargestellten Fall ist die waagerechte Trennwand 12 von mehreren langen, schmalen Platten gebildet, welche gemäss Figur 2 in der waagerechten Mittelebene des Wärmetauschers 10 zwischen den sich dort erstreckenden fünf Rohren 31 bzw. aussen von den beiden äusseren Rohren 31 angeordnet und damit verschweisst sind, wobei die äusseren Platten, welche die Längsränder 34 bilden, breiter als die inneren Platten zwischen den Rohren 31 sind.

Jedoch kann die Trennwand 12 stattdessen auch von einer durchgehenden Platte gebildet werden, welche zwischen zwei einander benachbarten waagerechten Reihen von Rohren 31 angeordnet wird. Diese Ausbildung kann insbesondere dann getroffen werden, wenn der Wärmetauscher 10 in der waagerechten Mittelebene keine Rohre 31 aufweist.

Die Auflage des Wärmetauschers 10 mit den Längsrändern 34 der waagerechten Trennwand 12 auf den inneren Längsvorsprüngen 35 des Gehäuses 1 kommt auch einer leichten Montage des Wärmetauschers 10 im Ofen zugute und ermöglicht eine einfache Auswechselbarkeit des Wärmetauschers 10, insbesondere dann, wenn der Wärmetauscher 10 ausschliesslich auf diese Weise im Ofen bzw. im Gehäuse 1 desselben abgestützt wird. Die durch einen geeigneten Deckel abschliessbare Öffnung des Gehäuses 1 zum Einschieben und Herausziehen des Wärmetauschers 10 in den Ofen bzw. aus dem Ofen ist in Figur 1 nicht dargestellt.

Die beiden parallel neben- bzw. übereinander verlaufenden Rauchgaskanäle 23 und 25 sind durch eine Trennwand 50 voneinander getrennt, welche einerseits an die Trennwand 12 dicht anschliesst und andererseits in eine um eine Achse 51 zwischen den beiden in Figur 1 gestrichelt wiedergegebenen Stellungen verstellbare Schwenkklappe 52 übergeht, mittels welcher die Querschnittsgrössen der gebläseseitigen Mündungen 53 und 54 des Rauchgaskanals 23 bzw. 25 verändert werden können. Die Trennwand 50 erstreckt sich zwischen den Längsseitenwänden 17 des Gehäuses 1 bzw. den entsprechenden Seitenwänden des gemeinsamen Gehäuses 55 der Rauchgaskanäle 23 und 25, ist also im waagerechten Bereich 50' im wesentlichen T-förmig ausgebildet und in Figur 1 links von der Stirnwand 24 des Gehäuses 1 senkrecht zur Zeichnungsebene breiter als rechts von der Stirnwand 24. Der Bereich 50' der Trennwand 50 bzw. der in Figur 1 links von der Stirnwand 24 des Gehäuses 1 befindliche, breitere Abschnitt der Trennwand 50 kann am Wärmetauscher 10 vorgesehen, insbesondere von einem Fortsatz der Trennwand 12 desselben gebildet sein.

Im Betrieb verbrennen in der Brennkammer 4 Holzstücke, und zwar selbst solche mit verhältnismässig hohem Feuchtigkeitsgehalt, rauchfrei und mit farbloser bzw. bläulicher Flamme vollständig. Die Asche fällt durch den Rost 5 in die Aschekammer 7 und kann aus dieser nach Öffnen der Klappe 9 durch die Öffnung 8 hindurch entfernt werden. Die nötige Verbrennungsluft strömt durch eine nicht dargestellte Regeleinrichtung in der Klappe 9 oder durch die Öffnung 8 in die Aschekammer 7, wobei im letztgenannten Fall die Klappe 9 so einstellbar ist, dass sie denjenigen Öffnungsquerschnitt für den Durchtritt von Verbrennungsluft freigibt, der für die jeweils benötigte oder gewünschte Verbrennungsluftmenge erforderlich ist. Aus der Aschekammer 7 geht die Verbrennungsluft durch den Rost 5 hindurch der Brennkammer 4 zu, wie in Figur 1 mit Pfeilen angedeutet.

Die Verbrennungsprodukte bzw. Rauchgase strömen, wie in Figur 1 ebenfalls mit Pfeilen angedeutet. Sie umspülen den Wärmetauscher 10 sowohl in der Unterkammer 14 als auch in der Oberkammer 13, um ihre Wärme an das im Wärmetauscher 10 enthaltene Strömungsmittel abzugeben. Die Rauchgase werden im wesentlichen an zwei einander gegenüberliegenden Stellen aus der Brennkammer 4 abgezogen, nämlich zum einen über den Rauchgaskanal 25 an der Ofenstirnseite A und zum anderen durch die Öffnung 18 an der anderen Ofenstirnseite B, die Oberkammer 13 und den anschliessenden Rauchgaskanal 23 hindurch, so dass insoweit die Oberkammer 13 mit dem Rauchgaskanal 23 einen ersten Rauchgaskanal bildet, welcher neben dem zweiten Rauchgaskanal 25 an der Saugseite des Gebläses 21 mündet, an dessen Druckseite der gemeinsame Rauchgaskanal 26 anschliesst. Der durch das Gebläse 21 bewirkte und von dessen Drehzahl abhängende Zug wird durch entsprechende Einstellung der Schwenkklappe 52 auf die beiden Rauchgaskanäle 23 und 25 sozusagen aufgeteilt und für jeden Rauchgaskanal 23 bzw. 25 so eingestellt, wie für eine optimale Verbrennung in der Brennkammer 4 jeweils erforderlich.

Der Ofen gemäss Figur 1 und 2 ist insbesondere zum Erhitzen von Wasser geeignet, wozu der Wärmetauscher 10 am Kasten 33 auf der den Rohren 31 abgewandten Seite einen unteren Kaltwasserzulauf 36 und einen oberen Warmwasserablauf 37 aufweist. Es ist jedoch auch eine andere Ausbildung des Wärmetauschers 10 möglich. Insbesondere zum Erhitzen von Luft statt Wasser als Wärmeträger kann der Wärmetauscher 10 mit mehreren jeweils in einer senkrechten Ebene verlaufenden, sich grösstenteils waagerecht erstreckenden Rohrschlangen und zwei langgestreckten Kästen versehen werden, wobei die Rohrschlangen parallel nebeneinander angeordnet sind und jeweils mit den beiden Enden in dem einen Kasten bzw. in dem anderen Kasten münden. Die beiden Kästen sind an einem Ende des Paketes von Rohrschlangen senkrecht übereinander angeordnet und jeweils auf der den Rohrschlangen abgewandten Seite mit einem Kaltlufteinlass bzw. einem Warmluftauslass versehen. Auch ein solcher Wärmetauscher 10 kann mit der waagerechten Trennwand 12 ausgestattet sein und im Ofen auswechselbar angeordnet werden.

Auch kann statt der waagerechten Trennwand 12 eine senkrechte Trennwand etwa in der Mitte zwischen den beiden Ofenstirnseiten A und B vorgesehen und können die beiden Rauchgaskanäle 23 und 25 statt an der Ofenstirnseite A etwa in der Mitte zwischen den beiden Ofenstirnseiten A und B oben aus dem Ofen herausgeführt werden, so dass die senkrechte Trennwand den den Wärmetauscher 10 enthaltenden Raum 11 oder den Raum oberhalb des Wärmetauschers 10 in eine in Figur 1 linke und eine in Figur 1 rechte Kammer unterteilt, welche oberhalb des Wärmetauschers 10 etwa in der Mitte zwischen den beiden Ofenstirnseiten A und B mit dem ersten bzw. dem zweiten Rauchgaskanal 23 bzw. 25 kommuniziert. Dabei geht die senkrechte Trennwand in die senkrechte Trennwand 50 zwischen den beiden Rauchgaskanälen 23 und 25 über, so dass diese Trennwände einstückig ausgebildet sein können. Unterhalb des Wärmetauschers 10 kommunizieren die beiden nebeneinander liegenden Kammern jeweils im Bereich der einen bzw. der anderen Ofenstirnwand B bzw. A mit der Brennkammer 4, in welcher unterhalb des Wärmetauschers 10 vorzugsweise eine entsprechend ausgebildete Haube vorgesehen ist, von welcher die den den Wärmetauscher 10 enthaltenden Raum 11 unterteilende Trennwand senkrecht nach oben absteht. Dabei ist es möglich, den Wärmetauscher 10 zweiteilig auszubilden und den einen Teil in der einen Kammer sowie den anderen Teil in der anderen Kammer anzuordnen. Falls die senkrechte Trennwand nur den Raum oberhalb des Wärmetauschers 10 unterteilt, dann erstreckt sie sich nicht bis zur Haube, sondern steht sie von einer waagerechten Trennwand senkrecht nach oben ab, welche zwischen Ofendecke und Wärmetauscher 10 angeordnet ist und an den beiden Ofenstirnseiten A und B jeweils im Abstand von der Stirnwand 24 bzw. 16 des Gehäuses 1 endet, um eine Öffnung für den Durchtritt von Rauchgas zu bilden, welches an der Ofenstirnseite A bzw. B unter der Haube hindurch aus der Brennkammer 4 abgeht. Zur Regelung der Zufuhr von Verbrennungsluft in die Brennkammer 4 kann statt der Klappe 9 in der Aschekammer 7 unterhalb des Rostes 5 eine im Längsschnitt gemäss Figur 1 im wesentlichen W-förmige Trennwand vorgesehen werden, welche mit den Oberkanten der beiden Aussenschenkel an der Unterseite des Bodens 3 der Brennkammer 4 beiderseits vom zweckmässigerweise ebenfalls entsprechend W-förmig ausgebildeten Rost 5 befestigt ist und in den beiden Aussenschenkeln jeweils eine durch eine Schwenkklappe verschliessbare Öffnung aufweist, wobei die beiden Schwenkklappen durch ein Gestänge derart bewegungsabhängig miteinander gekoppelt sind, dass sie simultan verstellbar sind, um denjenigen Öffnungsquerschnitt für den Durchtritt von Verbrennungsluft freizugeben, der für die jeweils benötigte oder gewünschte Verbrennungsluftmenge erforderlich ist. Dabei ist auch in der Stirnwand 24 des Gehäuses 1 eine der Öffnung 8 entsprechende Öffnung für den Lufteintritt in die Aschekammer 7 vorgesehen.

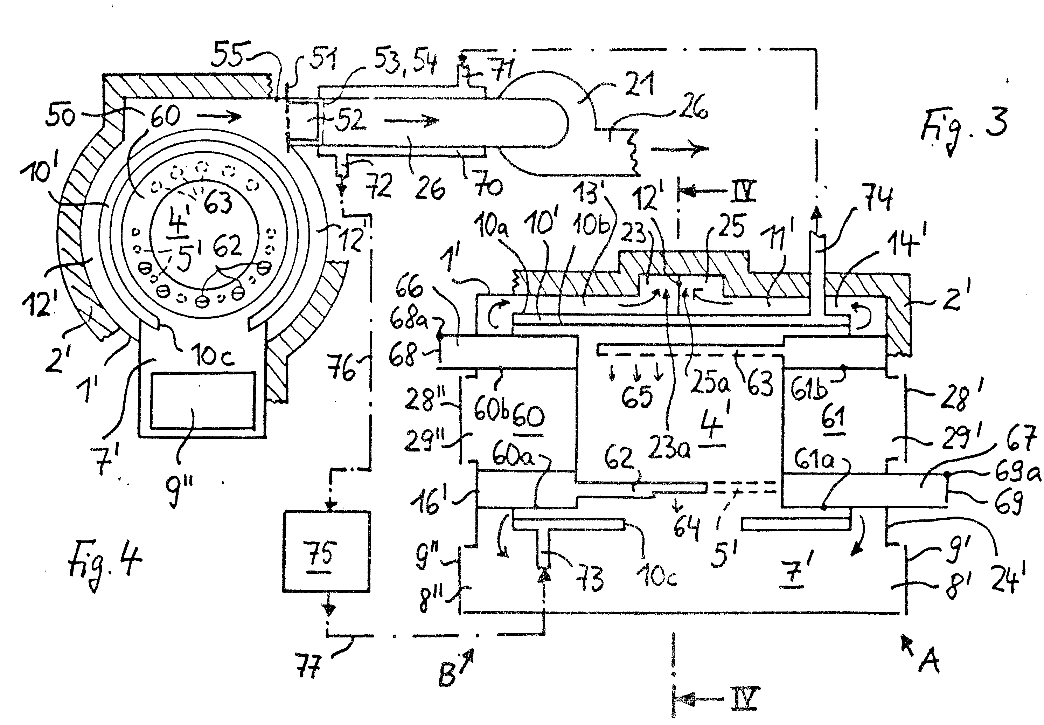

Figur 3 und 4 zeigen eine besonders bevorzugte Ausführungsform, welche ebenfalls insbesondere zur Erwärmung von Wasser geeignet ist. Dabei ist der vom zu erhitzenden Strömungsmittel durchströmte Wärmetauscher 10′ als waagerechter, im dargestellten Fall kreisrunder Hohlzylinder mit zylindrischer Aussenwandung 10a und dazu koaxialer, zylindrischer Innenwandung 10b ausgebildet, welche an den beiden Hohlzylinderenden jeweils durch einen Ring miteinander verbunden sind. Der zylindrische Wärmetauscher 10′ ist koaxial im ebenfalls zylindrisch ausgbildeten Gehäuse 1′ mit äusserer Wärmeisolierung 2′ angeordnet und umschliesst die Brennkammer 4′. In die beiden einander gegenüberliegenden Enden des Wärmetauschers 10′ ragt jeweils ein ebenfalls als waagerechter, im dargestellten Fall kreisrunder Hohlzylinder mit zylindrischer Aussenwandung 60a bzw. 61a und dazu koaxialer, zylindrischer Innenwandung 60b bzw. 61b ausgebildeter Wärmetauscher 60 bzw. 61 zur Vorwärmung von Verbrennungserst- bzw. -zweitluft. Die beiden im wesentlichen identischen Wärmetauscher 60 und 61 sind koaxial zum Wärmetauscher 10′ angeordnet und weisen jeweils an dem durch einen Ring verschlossenen inneren Ende eine untere bzw. obere Reihe waagerechter Rohre 62 bzw. 63 mit jeweils einer unteren, beispielsweise durch Wegschneiden der unteren Rohrhälfte gebildeten, langlochartigen Luftaustrittsöffnung 64 bzw. einer unteren Reihe von düsenartigen Luftaustrittsöffnungen 65 und an dem ebenfalls verschlossenen äusseren Ende einen oberen bzw. unteren Luftzufuhrstutzen 66 bzw. 67 mit einer um eine waagerechte Achse 68a bzw. 69a verschwenkbaren Schwenkklappe 68 bzw. 69 auf. Die oberen Rohre 63 des in Figur 3 rechten Wärmetauschers 61 erstrecken sich bis vor den in Figur 3 linken Wärmetauscher 60, die unteren Rohre 62 des linken Wärmetauschers 60 bis über eine untere, mittlere Öffnung 10c des Wärmetauschers 10′, durch welche hindurch die Asche aus der Brennkammer 4′ in die Aschekammer 7′ gelangt, welche sich unterhalb der zueinander koaxialen Wärmetauscher 10′, 60 und 61 erstreckt und gemäss Figur 4 kastenförmig mit im wesentlichen rechteckigem Querschnitt ausgebildet ist.

An den beiden Ofenstirnseiten A und B sind jeweils eine Klappe 9′ bzw. 9″ und eine Tür 28′ bzw. 28″ vorgesehen. Die beiden Klappen 9′ und 9″ verschliessen jeweils eine Ascheentnahmeöffnung 8″ bzw. 8″, welche im Bereich der Aschekammer 7′ in der in Figur 3 rechten bzw. linken Stirnwand 24′ bzw. 16′ des Gehäuses 1′ ausgebildet ist, die beiden Türen 28′ und 28″ jeweils eine Brennstoffeingabeöffnung 29′ bzw. 29″, welche innerhalb des Wärmetauschers 61 bzw. 60 in der Stirnwand 24′ bzw. 16′ des Gehäuses 1′ ausgebildet ist. Wie in Figur 3 und 4 mit gestrichelten Linien angedeutet, können im Wärmetauscher 10′ im unteren Bereich zwischen den Rohren 62 und oberhalb derselben waagerechte Roststäbe 5′ zur Brennstoffaufnahme vorgesehen werden, welche sich zwischen den beiden Wärmetauschern 60 und 61 erstrecken und im Abstand von der Innenwandung 10b des Wärmetauschers 10′ entlang derselben verteilt sind.

Innerhalb des Gehäuses 1′ ist eine senkrechte Trennwand 12′ vorgesehen, welche sich in der Querebene in der Mitte zwischen den beiden Ofenstirnseiten A und B und somit auch in der Mitte des Wärmetauschers 10' sowie in der Mitte zwischen den beiden Wärmetauschern 60 und 61 erstreckt, und zwar zwischen dem Gehäuse 1' und dem Wärmetauscher 10', wobei allerdings die Aschekammer 7' ausgespart ist, wie Figur 4 besonders deutlich zeigt. Die Trennwand 12' erstreckt sich also nicht quer durch die Aschekammer 7' und unterteilt den den Wärmetauscher 10' enthaltenden Raum 11' beiderseits und oberhalb des Wärmetauschers 10' in zwei etwa gleich grosse, nebeneinanderliegende Kammern 13' und 14', welche unterhalb des Wärmetauschers 10', nämlich in der Aschekammer 7', miteinander kommunizieren.

Die beiden Rauchgaskanäle 23 und 25 sind bei der Ausführungsform nach Figur 3 und 4 in der Mitte zwischen den beiden Ofenstirnseiten A und B oben aus dem Ofen herausgeführt, und zwar querliegend, so dass sie jeweils über einen zur senkrechten Trennwand 12' parallelen Längsschlitz 23a bzw. 25a mit der in Figur 3 linken Kammer 13' bzw. rechten Kammer 14' kommunizieren und diese Trennwand 12' im Gehäuse 1' zugleich die Trennwand 50 zwischen den beiden Rauchgaskanälen 23 und 25 bilden und sich mit einem entsprechenden Fortsatz in deren gemeinsames Gehäuse 55 erstrecken kann. Die Achse 51 der Schwenkklappe 52 zur Einstellung der Querschnittsgrössen der gebläseseitigen Mündungen 53 und 54 des ersten Rauchgaskanals 23 bzw. des zweiten Rauchgaskanales 25 ist dementsprechend auch senkrecht angeordnet, und zwar im dargestellten Fall unmittelbar neben der in Figur 4 rechten Stirnkante der Trennwand 50 bzw. Seitenkante des den Innenraum des gemeinsamen Gehäuses 55 der Rauchgaskanäle 23 und 25 in zwei nebeneinanderliegende Längshälften aufteilenden Fortsatzes der senkrechten Trennwand 12'.

Den beiden zur Schwenkklappe 52 führenden Rauchgaskanälen 23 und 25 ist ein Wärmetauscher 70 mit einem Strömungsmitteleinlass 71 an einem Ende und einem Strömungsmittelauslass 72 am anderen Ende nachgeschaltet, welcher einerseits von den in den Rauchgaskanälen 23 und 25 über die Schwenkklappe 52 zuströmenden Rauchgasen und andererseits von demselben Strömungsmittel wie der Wärmetauscher 10' durchströmt wird, und zwar im Gegenstrom, um den Rauchgasen restliche Wärme zu entziehen und das Strömungsmittel weiter zu erwärmen. Der Wärmetauscher 10', welcher die Brennkammer 4' umschliesst, weist einen unteren Strömungsmitteleinlass 73 an dem in Figur 3 linken Ende und einen oberen Strömungsmittelauslass 74 an dem in Figur 3 rechten Ende auf. Letzterer ist mit dem Strömungsmitteleinlass 71 an dem gebläseseitigen Ende des Wärmetauschers 70 verbunden, dessen Strömungsmittelauslass 72 am ofenseitigen Ende an einen mit dem erwärmten Strömungsmittel zu beheizenden Verbraucher 75, beispielsweise die Heizkörper einer Zentralheizungsanlage, angeschlossen ist, und zwar mit dessen Vorlauf 76 verbunden ist. Der Rücklauf 77 des Verbrauchers 75 ist an den Strömungsmitteleinlass 73 des die Brennkammer 4' umschliessenden Wärmetauschers 10' angeschlossen. Im Betrieb verbrennen in der Brennkammer 4' Holzstücke, und zwar selbst solche mit verhältnismässig hohem Feuchtigkeitsgehalt, rauchfrei und mit farbloser bzw. bläulicher Flamme vollständig. Die Asche fällt durch die Öffnung 10c des Wärmetauschers 10' in die Aschekammer 7' und kann aus dieser nach Öffnen der Klappen 9' und 9" durch die Öffnungen 8' und 8" hindurch entfernt werden. Die nötige Verbrennungsluft strömt als Verbrennungserstluft durch den Wärmetauscher 60 und die Rohre 62 sowie als Verbrennungszweitluft durch den Wärmetauscher 61 und die Rohre 63 in die Brennkammer 4', vorgewärmt im Wärmetauscher 60 bzw. 61 und genau dosiert mit Hilfe der Schwenkklappe 68 bzw. 69 im Luftzufuhrstutzen 66 bzw. 67.

Die Verbrennungsprodukte bzw. Rauchgase werden durch das Gebläse 21 über die beiden Ringspalte zwischen dem die Brennkammer 4' umschliessenden Wärmetauscher 10' und den beiden Wärmetauschern 60 und 61 in die beiden Kammern 13' und 14' und von dort in den ersten bzw. zweiten Rauchgaskanal 23 bzw. 25 gesaugt, wie in Figur 3 mit Pfeilen angedeutet, um dann an der Schwenkklappe 52 vorbei und durch den Wärmetauscher 70 hindurch zu strömen und schliesslich vom Gebläse 21 in den anschliessenden, gemeinsamen Rauchgaskanal 26 gedrückt zu werden, wie in Figur 4 mit Pfeilen angedeutet. Der durch das Gebläse 21 bewirkte und von dessen Drehzahl abhängende Unterdruck, womit die Kammer 13' bzw. 14' beaufschlagt wird, lässt sich dabei mittels der Schwenkklappe 52 genau einstellen, so dass das für eine optimale Verbrennung in der Brennkammer 4' jeweils erforderliche Verhältnis der Unterdrücke in den beiden Kammern 13' und 14' zueinander gewährleistet ist. Die Aschekammer 7' vermittelt dabei ein Puffervolumen, welches die Strömungsverhältnisse und die Verbrennung stabilisiert. Auch wird dadurch das Absetzen von in den Rauchgasen etwa enthaltenden Partikeln bewirkt, was der Vermeidung unzulässiger Emissionen zugute kommt, die praktisch ausgeschlossen sind.

Weitere Abwandlungen von den geschilderten und dargestellten Ausführungsformen sind möglich. So kann eine Einrichtung zum dosierten Wassereinsprühen in die Brennkammer 4 bzw. 4' vorgesehen werden, um die vollständige, rauchfreie Verbrennung mit farbloser bzw. bläulicher Flamme zu fördern, falls bei dem jeweils verbrannten, festen Brennstoff, insbesondere Holzstücken, erforderlich. Auch kann der Ofen verfahrbar ausgebildet werden. Er kann nämlich deswegen an verschiedenen Stellen eingesetzt werden, weil der gemeinsame Rauchgaskanal 26 nicht unbedingt an einen hohen Kaminschacht angeschlossen werden muss. Die aus dem Rauchgaskanal 26 austretenden Rauchgase sind rauch- bzw. qualm- und russfrei sowie verhältnismässig kühl. Selbst in dem relativ kurzen gemeinsamen Rauchgaskanal 26 ist der Zug ausgezeichnet.

Das im Ofen erhitzte Strömungsmittel, insbesondere Wasser oder Luft, kann als Wärmeträger bei Zentralheizungsanlagen für Gebäude, zum Trocknen von Getreide oder dergleichen in landwirtschaftlichen Betrieben usw. verwendet werden. Als Brennstoff kann selbst frisch geschlagenes, feuchtes Holz benutzt werden. Es findet stets eine rauch-, qualm- und russfreie Verbrennung mit farbloser bzw. bläulicher Flamme statt, so dass weder eine Verschmutzung des Ofens selbst noch eine Verschmutzung der Umwelt zu befürchten ist und der Energieinhalt des Brennstoffs optimal ausgenutzt wird. Es ist keine Nachverbrennung erforderlich. Die Regulierung der dem Ofen jeweils zuzuführenden Verbrennungsluftmenge ist einfach mit Hilfe der Klappe 9 bzw. deren Regeleinrichtung bzw. der Schwenkklappen der W-förmigen Trennwand unterhalb des Rostes 5 bzw. der Schwenkklappen 68 und 69 und des Gebläses 21 über die Schwenkklappe 52 möglich.

Bei der Ausführungsform nach Figur 3 und 4 bildet sich im Ofen auch dann kein Kondenswasser, wenn mit ihm Wasser erwärmt wird, da das Wasser in den beiden Wärmetauschern 10′ und 70 gleichzeitig erwärmt wird. Der Wärmetauscher 70 gewährleistet eine zusätzliche Wärmeübertragung auf das jeweils zu erhitzende Strömungsmittel. Die Querschnittsgestalt der Wärmetauscher 10′, 60 und 61 sowie des umgebenden Gehäuses 1′ muss nicht unbedingt kreisrund sein, sondern kann beispielsweise auch viereckig gewählt werden.

Der Ofen ist nicht auf die Verwendung von Holz, einschliesslich Holzabfällen, als Brennstoff beschränkt. Es kann jeder beliebige feste Brennstoff darin ausgezeichnet verbrannt werden. Auch kann er mit einer Einrichtung zum Einspritzen von Heizöl versehen werden, um auch dann das jeweilige Strömungsmittel erhitzen zu können, wenn gerade kein fester Brennstoff zur Verfügung stehen sollte.

**Patentansprüche**

1. Ofen zur Verbrennung fester Brennstoffe, insbesondere Holz, mit einer Brennkammer (4, 4′) und einem Wärmetauscher (10, 10′) zum Erhitzen eines Strömungsmittels, wobei die Verbrennungsluft am Boden der Brennkammer zuströmt und die Rauchgase an den beiden einander gegenüberliegenden Enden der Brennkammer aus derselben durch je einen ersten bzw. zweiten Rauchgaskanal hindurch mit Hilfe eines Gebläses (21) abgezogen werden, welche beiden Rauchgaskanäle (23, 25) in einen gemeinsamen Rauchgaskanal (26) münden, dadurch gekennzeichnet, dass das Gebläse (21) hinter dem ersten und dem zweiten Rauchgaskanal (23 bzw. 25) in dem gemeinsamen Rauchgaskanal (26) angeordnet ist, und dass vor dem gemeinsamen Rauchgaskanal (26) eine Schwenkklappe (52) zur Veränderung der Querschnittsgrössen der gebläseseitigen Mündungen (53 und 54) des ersten bzw. des zweiten Rauchgaskanals (23 bzw. 25) vorgesehen ist.

2. Ofen nach Anspruch 1, dadurch gekennzeichnet, dass der Wärmetauscher (10) oberhalb der Brennkammer (4) angeordnet ist, und dass der den Wärmetauscher (10) enthaltende Raum (11) durch eine waagerechte Trennwand (12) in eine Oberkammer (13) und eine Unterkammer (14) unterteilt ist, welche an einer Ofenstirnseite (A) mit dem ersten bzw. mit dem zweiten Rauchgaskanal (23 bzw. 25) kommuniziert, wobei die Trennwand (12) an der anderen Ofenstirnseite (B) eine Öffnung (18) begrenzt, über welche die Ober- und die Unterkammer (13 bzw. 14) miteinander kommunizieren.

3. Ofen nach Anspruch 1, dadurch gekennzeichnet, dass der Wärmetauscher (10) oberhalb der Brennkammer (4) angeordnet ist, und dass der den Wärmetauscher (10) enthaltende Raum (11) oder der Raum oberhalb des Wärmetauschers (10) durch eine senkrechte Trennwand in zwei nebeneinanderliegende Kammern unterteilt ist, welche unterhalb des Wärmetauschers (10) mit der Brennkammer (4) und oberhalb des Wärmetauschers (10) in der Mitte zwischen den beiden Ofenstirnseiten (A und B) jeweils mit dem ersten bzw. mit dem zweiten Rauchgaskanal (23 bzw. 25) kommunizieren.

4. Ofen nach Anspruch 1, dadurch gekennzeichnet, dass der Wärmetauscher (10′) als waagerechter, vorzugsweise kreisrunder, Zylinder ausgebildet ist und die Brennkammer (4′) umschliesst, und dass der den Wärmetauscher (10′) enthaltende Raum (11′) beiderseits und oberhalb des Wärmetauschers (10′) durch eine senkrechte Trennwand (12′) in zwei nebeneinanderliegende Kammern (13′ und 14′) unterteilt ist, welche unterhalb des Wärmetauschers (10′) miteinander und oberhalb des Wärmetauschers (10′) in der Mitte zwischen den beiden Ofenstirnseiten (A und B) jeweils mit dem ersten bzw. mit dem zweiten Rauchgaskanal (23 bzw. 25) kommunizieren, wobei in die beiden einander gegenüberliegenden Enden des Wärmetauschers (10′) jeweils ein ebenfalls als waagerechter, vorzugsweise kreisrunder, Zylinder ausgebildeter Wärmetauscher (60 bzw. 61) zur Vorwärmung von Verbrennungserst- bzw. -zweitluft ragt.

5. Ofen nach Anspruch 4, dadurch gekennzeichnet, dass die beiden Wärmetauscher (60 und 61) zur Vorwärmung von Verbrennungserst- bzw. -zweitluft jeweils am inneren Ende mit einer unteren bzw. oberen Reihe von waagerechten Rohren (62 bzw. 63) mit unteren Luftaustrittsöffnungen (64 bzw. 65) und am äusseren Ende mit einem oberen bzw. unteren Luftzufuhrstutzen (66 bzw. 67) mit einer Schwenkklappe (68 bzw. 69) versehen sind.

6. Ofen nach Anspruch 4 oder 5, dadurch gekennzeichnet, dass die drei Wärmetauscher (10′, 60 und 61) jeweils als Hohlzylinder mit koaxialen Aussen- und Innenwandungen (10a bzw. 10b; 60a bzw. 60b; 61a bzw. 61b) ausgebildet sind.

7. Ofen nach Anspruch 4, 5 oder 6, dadurch gekennzeichnet, dass dem ersten und dem zweiten Rauchgaskanal (23 bzw. 25) vor dem Gebläse (21) ein Wärmetauscher (70) nachgeschaltet ist, welcher eingangsseitig an einen oberen Strömungsmittelauslass (74) des die Brennkammer (4′) umschliessenden Wärmetauschers (10′) und ausgangsseitig an den Vorlauf (76) des mit dem erwärmten Strömungsmittel zu beheizenden Verbrauchers (75), dessen Rücklauf (77) mit einem unteren Strömungsmitteleinlass (73) des die Brennkammer (4′) umschliessenden Wärmetauschers (10′) verbunden ist, angeschlossen ist, so dass der den beiden Rauchgaskanälen (23 und 25) nachgeschaltete Wärmetauscher (70) von den aus denselben zuströmenden Rauchgasen und dem aus dem die Brennkammer (4′) umschliessenden Wärmetauscher (10′) kommenden Strömungsmittel im Gegenstrom durchströmt wird.

## Claims

1. Furnace for burning solid fuels, particularly wood, including a combustion chamber (4, 4′) and a heat exchanger (10, 10′) for heating a fluid, wherein the air of combustion enters at the bottom of said combustion chamber and the flue gases are withdrawn from said combustion chamber at the two opposite ends thereof through a first and respectively a second flue gas passage by means of a blower (21), said two flue gas passages (23, 25) opening into a common flue gas passage (26), characterized in that said blower (21) is disposed behind said first and said second flue gas passage (23 and respectively 25) in said common flue gas passage (26), and that a pivotable flap (52) for changing the cross-section magnitudes of the blower-sided openings (53 and 54) of said first and respectively said second flue gas passage (23 and respectively 25) is provided before said common flue gas passage (26).

2. Furnace according to claim 1, characterized in that said heat exchanger (10) is disposed above said combustion chamber (4), and that the space (11) containing said heat exchanger (10) is divided by a horizontal partition (12) into an upper chamber (13) and a lower chamber (14) which communicate at a furnace end side (A) with said first and respectively said second flue gas passage (23 and respectively 25), said partition (12) defining an opening (18) at the other furnace end side (B) through which said upper and said lower chamber (13 and respectively 14) communicate with each other.

3. Furnace according to claim 1, characterized in that said heat exchanger (10) is disposed above said combustion chamber (4), and that the space (11) containing said heat exchanger (10) or the space above said heat exchanger (10) is divided by a vertical partition into two chambers situated side by side which communicate below said heat exchanger (10) with said combustion chamber (4) and above said heat exchanger (10) in the middle between the two furnace end sides (A und B) with said first and respectively said second flue gas passage (23 and respectively 25).

4. Furnace according to claim 1, characterized in that said heat exchanger (10′) is designed as a horizontal, preferably circular, cylinder and encloses said combustion chamber (4′), and that the space (11′) containing said heat exchanger (10′) is divided on both sides of and above said heat exchanger (10′) by a vertical partition (12′) into two chambers (13′ and 14′) situated side by which communicate below said heat exchanger (10′) with each other and above said heat exchanger (10′) in the middle between the two furnace end sides (A and B) with said first and respectively said second flue gas passage (23 and respectively 25), wherein into each of the two opposite ends of said heat exchanger (10′) projects a heat exchanger (60 and respectively 61) for preheating primary and respectively secondary air of combustion which is also designed as a horizontal, preferably circular, cylinder.

5. Furnace according to claim 4, characterized in that each of said two heat exchangers (60 and 61) for preheating primary and respectively secondary air of combustion is provided at the inner end with a lower and respectively with an upper row of horizontal tubes (62 and respectively 63) having lower air outlet openings (64 and respectively 65) and at the outer end with an upper and respectively with a lower air supply stud (66 and respectively 67) having a povitable flap (68 and respectively 69).

6. Furnace according to claim 4 or 5, characterized in that each of said three heat exchangers (10′, 60 and 61) is designed as a hollow cylinder having coaxial outer and inner walls (10a and respectively 10b; 60a and respectively 60b; 61a and respectively 61b).

7. Furnace according to claim 4, 5 or 6, characterized in that said first and said second flue gas passage (23 and respectively 25) are followed by a heat exchanger (70) before said blower (21), said heat exchanger (70) being connected at the input side to an upper fluid outlet (74) of said heat exchanger (10′) enclosing said combustion chamber (4′) and at the output side to the input line (76) of the consumer means (75) to be heated with the heated fluid, the output line (77) of which is connected to a lower fluid inlet (73) of said heat exchanger (10′) enclosing said combustion chamber (4′), so that the flue gases coming from said two flue gas passages (23 and 25) and the fluid coming from said heat exchanger (10′) enclosing said combustion chamber (4′) flow through said heat exchanger (70) following said two flue gas passages (23 and 25) in counterflow.

## Revendications

1. Four pour la combustion de combustibles solides, en particulier de bois, avec une chambre de combustion (4, 4′) et un échangeur de chaleur (10, 10′) pour le chauffage d'un fluide d'écoulement, où l'air de combustion arrive sur le fond de la chambre de combustion et les fumées, en les deux extrémités opposées l'une à l'autre de la chambre de combustion, sont évacuées de cette dernière, par une première et une deuxième gaines de fumées, à l'aide d'un ventilateur (21), lesquelles deux gaines de fumées (23, 25) débouchent dans une gaine de fumées (26) commune, caractérisé en ce que le vantilateur (21) est disposé en aval de la première et de la deuxième gaines de fumées (23 et 25), dans la gaine de fumées commune (26), et que, en amont de la gaine de fumées commune (26) est prévu un registre pivotant (52) pour modifier la section transversale des orifices (53 et 54), côté ventilateur, respectivement de la première et de la deuxième gaines de fumées (23 et 25).

2. Four selon la revendication 1, caractérisé en ce que l'échangeur de chaleur (10) est disposé au-dessus de la chambre de combustion (4) et que l'espace (11) contenant l'échangeur de chaleur (10) est subdivisé, par une paroi de séparation horizontale (12), en une chambre supérieure (13) et une chambre inférieure (14) laquelle, sur le côté frontal (A) du four, communique avec la première ou la deuxième gaines de fumées (23 et 25), la paroi de séparation (12) limitant, sur l'autre côté frontal (B) du four, une ouverture (18) par laquelle communiquent l'une avec l'autre la chambre supérieure (13) et la chambre inférieure (14).

3. Four selon la revendication 1, caractérisé en ce que l'échangeur de chaleur (10) est disposé au-dessus de la chambre de combustion (4) et que l'espace (11) contenant l'échangeur de chaleur (10), ou l'espace au-dessus de l'échangeur de chaleur (10), est subdivisé par une paroi de séparation verticale en deux chambres disposées l'une à côté de l'autre, lesquelles communiquent en dessous de l'échangeur de chaleur (10) avec la chambre de combustion (4) et au-dessus de l'échangeur de chaleur (10), au milieu entre les deux côtés frontaux de four (A et B), avec la première et avec la deuxième gaines de fumées (23 et 25).

4. Four selon la revendication 1, caractérisé en ce que l'échangeur de chaleur (10') est constitué d'un cylindre horizontal, de préférence circulaire, et entoure la chambre de combustion (4'), et que l'espace (11') contenant l'échangeur de chaleur (10') est subdivisé, des deux côtés et au-dessus de l'échangeur de chaleur (10'), par une paroi de séparation verticale (12') en deux chambres (13' et 14') disposées l'une à côté de l'autre, lesquelles communiquent en dessous de l'échangeur de chaleur (10') l'une avec l'autre, et au-dessus de l'échangeur de chaleur (10'), au milieu entre les deux côtés frontaux du four (A et B), avec la première et avec la deuxième gaines de fumées (23 et 25), deux échangeurs de chaleur (60 et 61), eux aussi constitués d'un cylindre horizontal, de préférence circulaire, passant chacun dans chacune des deux extrémités, opposées l'une à l'autre, de l'échangeur de chaleur (10'), pour préchauffer l'air primaire et l'air secondaire de combustion.

5. Four selon la revendication 4, caractérisé en ce que les deux échangeur de chaleur (60 et 61) sont pourvus chacun en leurs extrémités intérieures, pour le préchauffage de l'air primaire et de l'air secondaire de combustion, d'une série inférieure et supérieure de tubes horizontaux (62, 63) possédant des orifices inférieurs de sortie d'air (64, 65) et, en leur extrémité extérieure, d'une tubulure d'amenée d'air supérieure et inférieure (66, 67) possédant un registre pivotant (68, 69).

6. Four selon l'une des revendications 4 ou 5, caractérisé en ce que chacun des trois échangeurs de chaleur (10', 60 et 61) est constitué d'un cylindre creux possédant des parois extérieures et intérieures coaxiales (10a, 10b; 60a, 60b; 61a, 61b).

7. Four selon l'une des revendications 4, 5 ou 6, caractérisé en ce qu'en aval de la première et de la deuxième gaines de fumées (23, 25) en amont du ventilateur (21), est installé un échangeur de chaleur (70) lequel est raccordé, coté entrée, à un orifice de sortie supérieur (74), pour le fluide d'écoulement, de l'échangeur de chaleur (10') qui entoure la chambre de combustion (4') et, côté sortie, à la conduite aller (76) du consommateur (75) à chauffeur par le fluide d'écoulement chauffé, et dont le circuit retour (77) est relié à un orifice d'entrée inférieur (73), pour le fluide d'écoulement, de l'échangeur de chaleur (10') qui entoure la chambre de combustion (4'), de sorte que l'échangeur de chaleur (70), installé en aval des deux gaines de fumées (23 et 25) est traversé, à contre-courant, par les fumées provenant de ces gaines, ainsi que par le fluide d'écoulement provenant de l'échangeur de chaleur (10') qui entoure la chambre de combustion (4').

Fig. 1

Fig. 2

Fig. 3

Fig. 4